(19) Europäisches Patentamt
European Patent Office
Office européen des brevets

(11) **EP 0 942 273 B1**

(12) **EUROPÄISCHE PATENTSCHRIFT**

(45) Veröffentlichungstag und Bekanntmachung des Hinweises auf die Patenterteilung:
**19.05.2004   Patentblatt 2004/21**

(51) Int Cl.⁷: $G01M\ 1/22$, $G01M\ 1/20$

(21) Anmeldenummer: **99104797.8**

(22) Anmeldetag: **11.03.1999**

(54) **Verfahren zur Ermittlung des Unwuchtausgleichs bei elastischen Rotoren**

Method for determining the compensation of the unbalance by elastic rotors

Méthode pour déterminer la compensation du déséquilibre des rotors élastiques

(84) Benannte Vertragsstaaten:
**CH DE ES FR GB IT LI**

(30) Priorität: **13.03.1998   DE 19811101**

(43) Veröffentlichungstag der Anmeldung:
**15.09.1999   Patentblatt 1999/37**

(73) Patentinhaber: **Schenck RoTec GmbH**
**64293 Darmstadt (DE)**

(72) Erfinder: **Wiese, Dietmar Dr.-Ing**
**64380 Rossdorf (DE)**

(74) Vertreter:
**Brandt, Ernst-Ulrich, Dipl.-Phys., Dipl.-Ing. et al**
**Schenck RoTec GmbH,**
**Patentabteilung,**
**Landwehrstrasse 55**
**64293 Darmstadt (DE)**

(56) Entgegenhaltungen:
| | |
|---|---|
| EP-A- 0 141 013 | EP-A- 0 327 026 |
| EP-A- 0 740 141 | WO-A-93/07458 |
| US-A- 4 607 529 | US-A- 4 783 998 |
| US-A- 5 138 884 | US-A- 5 396 436 |

**Beschreibung**

Die Erfindung betrifft ein Verfahren zur Ermittlung des Unwuchtausgleichs bei elastischen Rotoren gemäß Patentanspruch 1.

Beim niedertourigen Auswuchten starrer Rotoren einfacher zylindrischer Formen werden die Resultierenden aller Einzelunwuchten meist in der linken und der rechten Lagerebene gemessen und gegebenenfalls in zwei Ebenen kompensiert. Damit läuft ein starrer Rotor frei von Unwuchtschwingungen und Lagerkräften um. Da die Massenunsymmetrien im allgemeinen über die ganze Länge eines Rotors verteilt sind, bleiben im Rotor jedoch innere Biegemomente in Folge der von den einzelnen Unwuchten erzeugten Fliehkräfte zurück. Bei relativ elastischen Rotoren können diese mit dem Quadrat der Drehzahl ansteigenden Kräfte zu unzulässig großen Verformungen führen, die ihrerseits wieder Unwuchtwirkungen auslösen. Gefährlich kann dies insbesondere dann werden, wenn sich die Betriebsdrehzahl einer biegekritischen Drehzahl nähert, bei der ohne Dämpfung eine unendlich große Durchbiegung erfolgen würde.

Theoretisch besitzt ein Rotor oder eine Welle unendlich viele kritische Drehzahlen. Um das Schwingungverhalten bei einer bestimmten Drehzahl zu beurteilen, werden nur diejenigen kritischen Drehzahlen berücksichtigt, deren zugehörige Durchbiegungsformen bzw. Eigenformen stören. In der Praxis genügt es bei vielen Rotortypen meist, eine kritische Drehzahl zu berücksichtigen, die einen Rotor zur Wellenelastizität anregt. In bestimmten Fällen kann es aber auch erforderlich sein, mehrere kritische Drehzahlbereiche in Betracht zu ziehen. Ein einfacher walzenförmiger Rotor wird sich in der Nähe der ersten kritischen Drehzahl u-förmig, in der Nähe der zweiten s-förmig und in der Nähe der dritten w-förmig durchbiegen. Die diesen kritischen Drehzahlen zugeordneten Durchbiegungsformen werden auch Eigenformen des Rotors genannt.

Es muß mit elastischen Durchbiegungen umsomehr gerechnet werden, je höher die Betriebsdrehzahl ist. Ziel des Auswuchtens ist es daher, im gesamten zulässigen Drehzahlbereich die Starrkörperkräfte und die wellenelastische Auslenkung und die damit einhergehenden Kräfte auf ein tolerierbares Maß zu reduzieren. Es sind in der Praxis mehrere Auswuchtverfahren bekannt, die ein derartiges wellenelastisches Verhalten von Rotoren berücksichtigen.

Ein derartiges Verfahren ist auch aus dem Aufsatz von K. Federn, "Überblick über die gegenwärtigen Betrachtungsweisen, die Richtlinien und Normen und die gebräuchlichen Wege zum Auswuchten wellenelastischer Rotoren", VDI-Berichte Nr. 161, 1971, Seiten 5 bis 12, vorbekannt. Dort wird ein Mehr-Ebenen-Wuchten mit Ausgleich in (n + 2)-Ebenen beschrieben. Dabei handelt es sich um ein manuelles Auswuchtverfahren. Hierzu muß bei der Berücksichtigung von n-kritischen Drehzahlen in mindestens (n + 2)-Ausgleichsebenen ausgewuchtet werden. Dabei wird zunächst auf herkömmliche Weise ein Starrkörperunwuchtausgleich durchgeführt. Erst danach werden mit Hilfe von meist mehreren Testgewichtsläufen die modalen Unwuchten beseitigt. Dabei kommt es im wesentlichen auf die Erfahrung und das Geschick des Bedieners an, wieviele Auswuchtläufe nötig sind, um einen optimalen Lauf bei Betriebsdrehzahl zu erreichen. In der Regel sind aber immer eine größere Anzahl von Meßläufen nötig, um zu einem guten Auswuchtergebnis zu gelangen.

Aus dem Fachbuch von W. Kellenberger, "Elastisches Wuchten", Berlin 1987, Seiten 317 bis 325, wird ein rechnergestütztes Einflußkoeffizientenverfahren mit Testgewichten beschrieben, bei dem sowohl der Starrkörperausgleich als auch die wellenelastische Durchbiegung mit gemeinsam berechneten Ausgleichsmassen beseitigt bzw. reduziert wird. Dazu werden neben einem Urunwuchtmeßlauf noch mindestens soviele Unwuchtmeßläufe mit Testgewichten erforderlich, wie Ausgleichsebenen vorgesehen sind. Bei der Berücksichtigung der ersten kritischen Drehzahl wären demnach mindestens vier Unwuchtmeßläufe notwendig. Da nach diesem Verfahren die bei den Meßläufen mit Testgewichten gewonnenen Einflußkoeffizienten im Rechner gespeichert sind, können dann nachfolgende gleichartige Rotoren im günstigsten Fall mit nur einem Unwuchtmeßlauf ausgeführt werden. In jedem Fall sind aber beim erstmaligen Auswuchten von Rotoren diese mit Testgewichten zu bestücken und entsprechend der Anzahl der zu berücksichtigenden Ausgleichsebenen Testgewichtsläufe durchzuführen.

Aus einem Bericht von R. Gasch und J. Drechsler, "Modales Auswuchten elastischer Läufer ohne Testgewichtsetzungen", VDI-Berichte Nr. 320, 1978, Seiten 45 bis 53, ist ein Verfahren bekannt, das ohne die vorher beschriebenen Testgewichtsläufe die erforderlichen Ausgleichsmassen ermittelt, um die wellenelastische Auslenkung des Rotors zu kompensieren. Dabei wird vorgeschlagen, nach einem zuvor durchgeführten Starrkörperausgleich einen Unwuchtmeßlauf bis in die zu berücksichtigenden kritischen Drehzahlbereiche durchzuführen und dabei die Rotorauslenkung mit Hilfe von Wegaufnehmern an vorbestimmten Rotorstellen zu messen. Durch die registrierten elastischen Auslenkungen der Rotorwelle unter Kenntnis der Eigenform und der zugehörigen generalisierten Massen, ist es möglich, rechnergestützt modale Unwuchtanteile zu identifizieren und entsprechende Ausgleichsgewichte zu berechnen. Dieses Verfahren hat den Nachteil, daß zunächst in herkömmlicher Weise ein Starrkörperausgleich durchgeführt werden muß und erst danach durch zusätzliche Meß- und Ausgleichsvorgänge die modalen Unwuchten beseitigt werden müssen.

Aus der DE 41 33 787 A1 ist ein weiteres Auswuchtverfahren für elastische Rotoren bekannt, das ohne Testgewichtsläufe die zum Ausgleich der Starrkörperunwucht und der wellenelastischen Auslenkungen des Rotors erforderlichen Ausgleichsmassen ermittelt. In einem Unwuchtmeßlauf bei einer Drehzahl, bei der der Rotor Starrkörperverhalten zeigt, wird zunächst mindestens ein Unwuchtmeßwert ermittelt. Mindestens ein weiterer Unwuchtmeßwert pro Lagerebene und auszugleichender Eigenform wird bei einer Drehzahl im Bereich der zu berücksichtigenden Eigenformdrehzahl ermittelt. In einer Auswerteeinrichtung wird mit Hilfe der gewonnenen Unwuchtmeßwerte und rotor- bzw. lagerspezifischen Kenndaten der Unwuchtausgleich zur Kompensation der Starrkörperunwucht und des zu berücksichtigenden Eigenformanteils errechnet, wobei für jede Lagerebene ein konstanter drehzahlunabhängiger Kraftfingerprint errechnet wird, der die Unwuchtwirkung des elastischen Rotorverhaltens mitbeschreibt. Bei diesem Verfahren ist es erforderlich, rotor- und lagerspezifische Kenndaten, wie Abmessungs-, Form- und verwendete Materialdaten des auszuwuchtenden Rotors der Recheneinheit einzugeben.

Der Erfindung liegt die Aufgabe zugrunde, ein Verfahren zur Ermittlung des Unwuchtausgleichs bei elastischen Rotoren zu schaffen, das ohne Testgewichtsläufe und im wesentlichen ohne Heranziehung von separat ermittelten rotor- und lagerspezifischen Kenndaten eine schnelle Beseitigung von Rotorunwuchten elastischer Rotoren sicherstellt.

Erfindungsgemäß wird diese Aufgabe gelöst mit den im Patentanspruch 1 angegebenen Merkmalen. Weiterbildungen der Erfindung sind Gegenstand der Unteransprüche.

Der Erfindung liegt die Erkenntnis zugrunde, daß mittels Krafterregung des Rotors in mehreren Ausgleichsebenen die zum Unwuchtausgleich erforderlichen Einflußkoeffizienten vollständig bestimmt werden können. Mittels eines Urunwuchtlaufs und der ermittelten und hinsichtlich Unwuchtwirkung transformierten Einflußkoeffizienten lassen sich auf einfachste Weise die gesuchten Kompensationsunwuchten bestimmen.

Mit der Erfindung ist es erstmals möglich, ohne vorherige Erfassung des Gesamtsystems bestehend aus Rotor und Lagerung und der nachfolgenden rechnerischen Aufbereitung dieser Daten die Einflußkoeffizienten meßtechnisch zu ermitteln und zur Ermittlung des Unwuchtausgleichs zu verwenden. Als besonders günstig erweist es sich, daß die Krafterregung wahlweise im Stillstand des Rotors oder auch bei Rotation erfolgen kann. Auf die Ermittlung von Einflußkoeffizienten mittels mehrerer Testgewichtsläufe kann in vorteilhafter Weise verzichtet werden.

Die Erfindung wird im folgenden anhand eines in der Zeichnung dargestellten Ausführungsbeispiels näher erläutert. Es zeigen:

Fig. 1    eine schematische perspektivische Darstellung einer Unwuchtmeßeinrichtung.

Fig. 2    eine prinzipielle Darstellung des Einflußkoeffizientenverlaufs im Stillstand und bei Rotation.

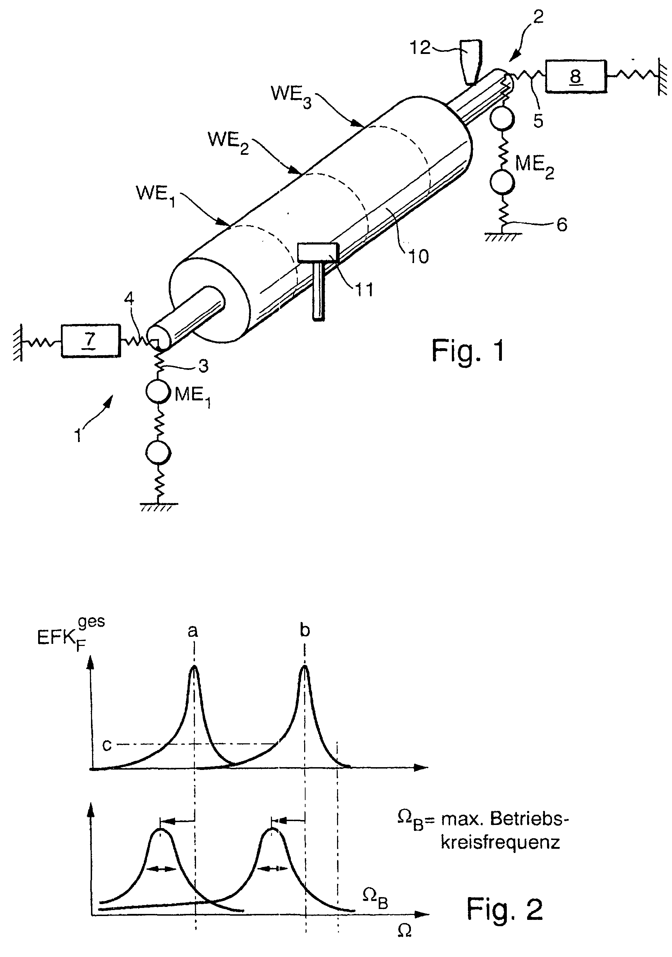

Die in der Fig. 1 schematisch dargestellte Unwuchtmeßeinrichtung weist eine erste Lagereinrichtung 1 und eine zweite Lagereinrichtung 2 für den Rotor 10 auf, die beispielsweise als herkömmliche Schwingbrückenlagerung einer kraft- oder wegmessenenden Auswuchtmaschine ausgebildet sind. Diese sind gegen ortsfeste Teile der Auswuchtmaschine schwingfähig abgestützt, was durch die Feder/Masse Symbole 3, 4 und 5, 6 angedeutet ist. Bei kraftmessenden Auswuchtmaschinen erfolgt in bekannter Weise die Erfassung von Schwingungen über Kraftaufnehmer, bei wegmessenden Auswuchtmaschinen über Schwingweg- oder Schwinggeschwindigkeitsaufnehmer. Die Aufnehmer sind in Fig. 1 mit den Bezugsziffern 7 und 8 gekennzeichnet und sind bezüglich ihrer Meßrichtung horizontal und rechtwinklig zur Rotationsachse angeordnet. Weiter ist vorgesehen ein Aufnehmer 12 zur Abtastung der Drehzahl des Rotors 10. Nicht dargestellt ist ein Antrieb für die Drehbewegung des Rotors 10, der in bekannter Weise beispielsweise mit einem der Rotorzapfen verbunden sein kann oder der als Bandantrieb ausgebildet sein kann. Statt eines separaten Aufnehmers für die Drehzahl kann der Antrieb die Drehzahlmeßvorrichtung enthalten. Der Antrieb ist so ausgebildet, daß auch feste Umdrehungszahlen vorgegeben werden können.

Der Rotor 10 weist im dargestellten Beispiel zwei Rotorzapfen auf und ist weitgehend symmetrisch. Im dargestellten Beispiel soll nur das wellenelastische Verhalten der ersten Rotoreigenform berücksichtigt und kompensiert werden; deshalb sind lediglich drei Ausgleichsebenen $WE_1$, $WE_2$ und $WE_3$ vorgesehen. Allgemein gilt, daß zur Berücksichtigung von n Eigenformen n+2 Ausgleichsebenen vorzusehen sind, wobei in der Praxis allenfalls die drei ersten Eigenformen Berücksichtigung finden, da Unwuchtwirkungen weiterer Eigenformen in der Praxis zu vernachlässigen sind. Es ist ferner eine Einrichtung zur sukzessiven Krafterregung des stillstehenden Rotors in seinen Ausgleichsoder Wuchtebenen $WE_1$, $WE_2$ und $WE_3$ in Meßrichtung vorgesehen, die in einfachster Form als Hammer 11 ausgebildet sein kann. Der Hammer 11 ist mit einer Einrichtung versehen, mit der der zeitabhängige Verlauf der Erregerkraft erfaßt wird, so daß jeweils ein Erregerkraftspektrum pro Ausgleichs- oder Wuchtebene $WE_1$, $WE_2$ und $WE_3$ gebildet werden kann.

Als Auswirkungen einer Kraft- bzw. Unwuchterregung eines rotierenden Rotors treten Wellenschwingungen, Lagerwege, -geschwindigkeiten, -beschleunigungen etc. auf. Exemplarisch wird im folgenden auf die Kräfte, die auf die Lagereinrichtungen 1, 2 z.B. einer Auswuchtmaschine ausgeübt werden, abgestellt.

Der Aufnehmer 7, 8 an der jeweiligen Lagereinrichtung 1, 2 liefert einen zeitabhängigen Lagerkraftverlauf in dieser Lageroder Meßebene $ME_1$, $ME_2$, so daß pro Lagerebene und pro Anregung jeweils ein Kraftspektrum, im Beispiel also drei komplexe Spektren je Lagerebene wegen der Anregungen in den drei Wuchtebenen $WE_1$, $WE_2$ und $WE_3$ gebildet werden können.

Für die auf die in den Lagereinrichtungen 1, 2 integrierten Kraftaufnehmer 7, 8 einwirkenden Kräfte aus einer Rotorunwucht ergibt sich im einzelnen:

$$F_{1u}^{ges}(\Omega) = U\Omega^2 \cdot \frac{L-x}{L} + \sum_i \frac{\Omega^2}{\omega_i^2 - \Omega^2 + j2\delta_i\Omega} \cdot U\Omega^2 \frac{\varphi_i(x) m_1^{ei}}{m_{geni}}$$

$$F_{2u}^{ges}(\Omega) = U\Omega^2 \cdot \frac{x}{L} + \sum_i \frac{\Omega^2}{\omega_i^2 - \Omega^2 + j2\delta_i\Omega} \cdot U\Omega^2 \frac{\varphi_i(x) m_2^{ei}}{m_{geni}}$$

mit:

U =   Unwucht in der Unwuchtebene
x =   Abstand der Unwuchtebene von der linken Lagerebene $ME_1$
L =   Abstand der beiden Lagerebenen
$\varphi_i(x)$ =   i.te Eigenform
$\omega_i$ =   i.te Eigenkreisfrequenz
$\delta_i$   = modale Abklingkonstante der i.ten Eigenform
$m_{geni}$   = modale Systemmasse der i.ten Eigenform
$m_{1/2}^{ei}$   = auf die linke/rechte Lagereinrichtung bezogene eigenformspezifische Ersatzmasse der i.ten Eigenform
$\Omega$ =   Kreisfrequenz

Für den Fall der Krafterregung mit einer umlaufenden Kraft F konstanter Größe erhält man:

$$F_{1F}^{ges}(\Omega) = F\frac{L-x}{L} + \sum_i \frac{\Omega^2}{\omega_i^2 - \Omega^2 + j2\delta_i\Omega} \cdot F \cdot \frac{\varphi_i(x) m_1^{ei}}{m_{geni}}$$

$$F_{2F}^{ges}(\Omega) = F \cdot \frac{x}{L} + \sum_i \frac{\Omega^2}{\omega_i^2 - \Omega^2 + j2\delta_i\Omega} \cdot F \frac{\varphi_i(x) m_2^{ei}}{m_{geni}}$$

Dividiert man die Gesamtkräfte (Lagerkraftspektrum) bei Unwucht- bzw. Krafterregung durch die jeweilige Ursache (Unwuchtspektrum U bzw. Kraftspektrum F) so ergeben sich die Einflußkoeffizienten EFK wie folgt:

$$EFK_{1U}^{ges}(\Omega) = \frac{F_{1U}^{ges}(\Omega)}{U} \qquad EFK_{1F}^{ges}(\Omega) = \frac{F_{1F}^{ges}(\Omega)}{F}$$

bzw.

$$EFK_{2U}^{ges}(\Omega) = \frac{F_{2U}^{ges}(\Omega)}{U} \qquad EFK_{2F}^{ges}(\Omega) = \frac{F_{2F}^{ges}(\Omega)}{F}$$

Aus den im Beispiel drei komplexen Erregerkraftspektren und den sechs komplexen Lagerkraftspektren lassen sich Einflußkoeffizienten $EFK_F$ in Form der komplexen Matrix $\alpha_{ij}^F$ (n) herleiten, wobei

j = 1,2 die Meßebenen bzw. Lagerebenenanzahl ist; im Beispiel j = 2
i = 1,2 3 die Wuchtebene bzw. Ausgleichsebenenanzahl ist, im Beispiel i = 3
F die Kraft-Einflußkoeffizienten kennzeichnet
n = Rotordrehzahl

Je nachdem ob die Verhältnisse bei Rotorstillstand bzw. Rotation gleich oder unterschiedlich sind, müssen die meßtechnisch ermittelten $EFK_F$-Verläufe bei Krafterregung unterschiedlich umgerechnet bzw. transformiert werden auf $EFK_U$-Verläufe bei Unwuchtanregung.

Gleiche Verhältnisse zwischen Stillstand und Rotation liegen praktisch z.B. vor bei walzenförmigen Rotoren, wie Papierwalzen, die auf konventionellen kraftmessenden Auswuchtmaschinen ausgewuchtet werden. Ausgewuchtet wird hier bis knapp unterhalb der ersten kritischen Drehzahl.

Erste Eigenfrequenz und modaler Dämpfungsgrad unterscheiden sich bei Stillstands- und Rotationsmessungen praktisch nicht. Genauso verhält es sich mit der ersten Eigenform. Gyroskopische Effekte sind vernachlässigbar.

Die Kraft-Einflußkoeffizienten $EFK_F$ bzw. $\alpha_{ij}^F$, die aus der Krafterregung resultieren, stehen im Falle gleicher Verhältnisse bei Stillstand und bei Rotation wie folgt in Beziehung zu den Unwucht-Einflußkoeffizienten $EFK_U$ bzw. $\alpha_{ij}^U$:

$$\alpha_{ij}^U = \Omega^2\, \alpha_{ij}^F$$

mit $\Omega$ Kreisfrequenz des Rotors.

Mit $\alpha_{ij}^U = \underline{A}$ ergibt sich aus der Beziehung $\underline{A} \cdot \vec{U} = -\vec{F}$ mit

$F_{ME1}(n_1), F_{ME1}(n_2), F_{ME1}(n_3)$
$F_{ME2}(n_1), F_{ME2}(n_2), F_{ME2}(n_3)$

die während des Unwuchtmeßlaufs bei den drei Drehzahlen $n_1, n_2, n_3$ in der linken Lagerebene $ME_1$ bzw. in der rech ten Lagerebene $ME_2$ gemessenen Kräfte
und mit der Lösungsmethode der kleinsten Fehlerquadratsumme

$$[\underline{A}^{*T} \cdot \underline{A}] \cdot \vec{u} = -[\underline{A}^{*T} \cdot \vec{F}]$$

die Lösung

$$\vec{u} = -[\underline{A}^{*T} \cdot \underline{A}]^{-1} \cdot [\underline{A}^{*T} \vec{F}]$$

womit die Kompensationsumwucht nach Größe und Winkellage bestimmt ist.

Liegen unterschiedliche Verhältnisse bei Rotorstillstand und Rotation vor, wie dies praktisch immer bei gleitgelagerten Rotoren der Fall ist, ist eine Modifikation des Verfahrens erforderlich. Bei gleitgelagerten Rotoren ändern sich die Verhältnisse durch z.B. die drehzahlabhängigen Eigenschaften des Ölfilms und eventueller gyroskopischer Effekte. Im Rotorstillstand und bei Rotation mißt man unterschiedliche Eigenfrequenzen und zugehörige modale Dämpfungsgrade.

Anhand der Darstellung in Fig. 2 läßt sich die erforderliche Modifikation näher erläutern.

In der oberen Darstellung der Fig. 2 ist der Verlauf der Einflußkoeffizienten $EFK_F^{ges}$ ($\Omega$) im Stillstand des Rotors bei Krafterregung durch z.B. Hammerschlag dargestellt. Die Kurvenverläufe a und b sind relevante modale Beiträge, während c ein konstanter Beitrag durch die statische Kraft ist. In der unteren Darstellung ist die Hochlaufkurve des rotierenden Rotors dargestellt. Aus dem Vergleich der Kurvenzüge in den beiden Darstellungen ist ersichtlich, daß sich die modalen Beiträge in der Frequenz verschoben haben und unterschiedliche modale Dämpfungsgrade vorliegen.

Beispielsweise mit Methoden der Modalanalyse kann man für die relevanten modalen Beiträge a, b zum $EFK_F^{ges}$ ($\Omega$) -Verlauf die zugehörigen Parameter $\omega_i$, $\delta_i$ und die Konstanten

$$\varphi_i(x)\, \frac{m_{1/2}^{ei}}{m_{geni}}$$

identifizieren.

Die $\omega_i$ und $\delta_i$-Werte aus der Krafterregung im Stillstand können ersetzt werden durch die im Hochlauf bzw. Unwuchtmeßlauf ermittelten Eigenkreisfrequenzen $\omega_i$ und modalen Abklingkonstanten $\delta_i$, die auch wieder beispielsweise per Modalanalyse identifiziert werden können.

Summiert man nun den statischen Anteil und die relevanten modalen Beiträge unter Berücksichtigung der im Hochlauf bzw. Unwuchtmeßlauf ermittelten Eigenkreisfrequenzen und modalen Abklingkonstanten auf und multipliziert mit $\Omega^2$, so erhält man eine Approximation für den EFK-Verlauf bei Unwuchtanregung.

Die Gleichung auf Seite 8 würde sich beispielsweise wie folgt darstellen

$$EFK_{1u}^{ges}(\Omega) \cong \Omega^2\left(\frac{L-x}{L} + \sum_{i=a,b}\frac{\Omega^2}{\omega_i^2-\Omega^2+j2\delta_i\Omega} \cdot \frac{q_i(x)m_1^{ci}}{m_{geni}}\right)$$

wobei der erste Summand in der Klammer aus dem $EFK_F^{ges}(\Omega)$ -Verlauf durch Krafterregung im Stillstand herrührt, der letzte Term im zweiten Summanden der Klammer mittels Modalanalyse nach Krafterregung im Stillstand erhalten wird, und $\omega_i$, $\delta_i$ Werte sind, die beim Hochlauf oder Unwuchtmeßlauf anfallen.

Wie für den zuständigen Fachmann leicht ersichtlich ist, ist die obige Gleichung eine Näherung, da höhere modale Beiträge vernachlässigt wurden.

**Patentansprüche**

1. Verfahren zur Ermittlung des Unwuchtausgleichs bei elastischen Rotoren, bei dem der Rotor (10) in zumindest zwei Lagereinrichtungen (1,2) drehbar gelagert wird, der Rotor in jeder vorgesehenen Ausgleichsebene vorzugsweise mechanisch beispielsweise durch Hammerschlag quer zur Achsrichtung krafterregt wird, das Kraftspektrum der Erregerkraft ermittelt wird, das dadurch induzierte Schwingungsverhalten des Rotors vorzugsweise in seinen Lagerebenen als Antwortspektrum in Form eines Kraft- oder Schwingungsspektrums erfaßt wird, Einflußkoeffizienten aus dem Verhältnis von Antwortspektren zu den Erregerkraftspektren hergeleitet werden, in einem Meßlauf Rotordrehzahlen zugeordnete Kraft- oder Schwingungssignale vorzugsweise in den Lagerebenen gemessen werden und unter Heranziehung der Einflußkoeffizienten und der bei der Rotation gemessenen Kraft- oder Schwingungssignale die Kompensationsunwuchten ermittelt werden.

2. Verfahren nach Anspruch 1, **dadurch gekennzeichnet, daß** die Lösung des unter Heranziehung der Einflußkoeffizienten und der aus den Kraft- oder Schwingungssignalen des Meßlaufs abgeleiteten Größen gebildeten Gleichungssystems nach der Methode der kleinsten Fehlerquadratsumme erfolgt.

3. Verfahren nach Anspruch 1 oder Anspruch 2, **dadurch gekennzeichnet, daß** in dem Drehzahlbereich, in dem der Rotor als starr zu betrachten ist und in zumindest einem Drehzahlbereich, bei dem der Rotor elastische Auslenkungen zeigt, gemessen wird.

4. Verfahren nach Anspruch 3, **dadurch gekennzeichnet, daß** zur Erfassung von n Eigenformen in n-Drehzahlbereichen, in denen sich elastisches Verhalten des Rotors zeigt, gemessen wird.

5. Verfahren zur Ermittlung der Einflußkoeffizienten zum Auswuchten elastischer Rotoren, bei dem der Rotor (10) in zumindest zwei Lagereinrichtungen (1,2) drehbar gelagert wird, der Rotor in jeder vorgesehenen Ausgleichsebene vorzugsweise mechanisch beispielsweise durch Hammerschlag quer zur Achsrichtung krafterregt wird, das Kraftspektrum der Erregerkraft ermittelt wird, das dadurch induzierte Schwingungsverhalten des Rotors vorzugsweise in seinen Lagerebenen als Antwortspektrum in Form eines Kraft- oder Schwingungsspektrums erfaßt wird und Einflußkoeffizienten aus dem Verhältnis von meßtechnisch erfaßten Antwortspektren zu den meßtechnisch erfaßten Erregerkraftspektren hergeleitet und transformiert werden zu Einflußkoeffizienten bei Unwuchtanregung.

6. Verfahren nach einem der vorhergehenden Ansprüche, **dadurch gekennzeichnet, daß** Veränderungen des Einflusses der modalen Beiträge auf den Verlauf der Einflußkoeffizienten berücksichtigt werden.

7. Verfahren nach Anspruch 6, **dadurch gekennzeichnet, daß** mittels Modalanalyse der Einfluß der modalen Beiträge ermittelt wird.

8. Verfahren nach einem der vorhergehenden Ansprüche, **dadurch gekennzeichnet, daß** die Krafterregung in Meßrichtung der Kraft- oder Schwingungsaufnehmer erfolgt.

9. Verfahren nach einem oder mehreren der vorhergehenden Ansprüche, **dadurch gekennzeichnet, daß** die Kraftterregung bei rotierendem Rotor vorgenommen wird.

**Claims**

1. Method of determining the unbalance compensation in elastic rotors, whereby the rotor (10) is mounted rotatably in at least two bearing devices (1, 2), the rotor in each intended compensation plane is force-excited preferably mechanically e.g. by a hammer blow at right angles to the axial direction, the force spectrum of the excitation force is determined, the vibration response of the rotor induced thereby is acquired preferably in its bearing planes as a response spectrum in the form of a force- or vibration spectrum, influence coefficients are derived from the ratio of response spectra to excitation force spectra, in a test run force- or vibration signals associated with rotor speeds are measured preferably in the bearing planes and the compensation unbalances are determined using the influence coefficients and the force- or vibration signals measured during rotation.

2. Method according to claim 1, **characterized in that** solving of the system of equations formed using the influence coefficients and the quantities derived from the force- or vibration signals of the test run is effected using the method of the least error square sum.

3. Method according to claim 1 or claim 2, **characterized in that** measurement is effected in the speed range, in which the rotor is to be regarded as rigid, and in at least one speed range, in which the rotor exhibits elastic excursions.

4. Method according to claim 3, **characterized in that** measurement is effected to acquire n characteristic shapes in n speed ranges, in which elastic response of the rotor is exhibited.

5. Method of determining the influence coefficients for balancing elastic rotors, whereby the rotor (10) is mounted rotatably in at least two bearing devices (1, 2), the rotor in each intended compensation plane is force-excited preferably mechanically e.g. by a hammer blow at right angles to the axial direction, the force spectrum of the excitation force is determined, the vibration response of the rotor induced thereby is acquired preferably in its bearing planes as a response spectrum in the form of a force- or vibration spectrum and influence coefficients are derived from the ratio of metrologically acquired response spectra to metrologically acquired excitation force spectra and transformed into influence coefficients for unbalance stimulation.

6. Method according to one of the preceding claims, **characterized in that** variations of the influence of the modal contributions upon the characteristic of the influence coefficients are taken into account.

7. Method according to claim 6, **characterized in that** by means of modal analysis the influence of the modal contributions is determined.

8. Method according to one of the preceding claims, **characterized in that** the force excitation is effected in measuring direction of the force- or vibration sensors.

9. Method according to one or more of the preceding claims, **characterized in that** the force excitation is effected while the rotor is rotating.

**Revendications**

1. Procédé de détermination de la compensation du balourd de rotors élastiques, dans lequel le rotor (10) est monté tournant dans au moins deux dispositifs de palier (1, 2), le rotor étant soumis à une force transversalement à la direction axiale, dans chaque plan d'équilibrage prévu, de préférence mécaniquement, par exemple par des coups de marteau, le spectre de la force d'excitation est déterminé, le comportement en oscillations ainsi induit du rotor est enregistré de préférence dans ses plans de palier comme spectre de réponse sous la forme d'un spectre des forces ou spectre d'oscillations, des coefficients d'influence sont dérivés à partir du rapport entre les spectres de réponse et les spectres de la force d'excitation, des signaux de force ou d'oscillation, associés à des vitesses de rotation du rotor au cours d'un cycle de mesure, sont mesurés de préférence dans les plans de palier, et les balourds de compensation sont déterminés en utilisant les coefficients d'influence et les signaux de force ou d'oscillation mesurés pendant la rotation.

2. Procédé selon la revendication 1, **caractérisé en ce que** la solution du système d'équations formé par utilisation des coefficients d'influence et des grandeurs dérivées des signaux de force ou d'oscillation du cycle de mesure, s'effectue selon la méthode de la plus petite somme des carrés des erreurs.

3. Procédé selon la revendication 1 ou la revendication 2, **caractérisé en ce que** l'on mesure dans la plage des vitesses de rotation, dans laquelle le rotor doit être considéré comme rigide, et dans au moins une plage des vitesses de rotation dans laquelle le rotor manifeste des déviations élastiques.

4. Procédé selon la revendication 3, **caractérisé en ce que** pour détecter n formes propres, on mesure dans n plages des vitesses de rotation dans lesquelles le rotor manifeste un comportement élastique.

5. Procédé de détermination de la compensation du balourd de rotors élastiques, dans lequel le rotor (10) est monté tournant dans au moins deux dispositifs de palier (1, 2), le rotor étant soumis à une force transversalement à la direction axiale, dans chaque plan d'équilibrage prévu, de préférence mécaniquement, par exemple par des coups de marteau, le spectre de la force d'excitation est déterminé, le comportement en oscillations ainsi induit du rotor est enregistré de préférence dans ses plans de palier comme spectre de réponse sous la forme d'un spectre des forces ou spectre d'oscillations, des coefficients d'influence sont dérivés à partir du rapport entre des spectres de réponse enregistrés par une technique de mesure et les spectres de forces d'excitation enregistrés par une technique de mesure, et sont transformés en coefficients d'influence en cas d'excitation à balourd.

6. Procédé selon l'une des revendications précédentes, **caractérisé en ce qu'**on tient compte de variations de l'influence des contributions modales sur la courbe des coefficients d'influence.

7. Procédé selon la revendication 6, **caractérisé en ce que** l'influence des contributions modales est déterminée par une analyse modale.

8. Procédé selon l'une des revendications précédentes, **caractérisé en ce que** l'excitation avec une force s'effectue dans la direction de mesure des capteurs de force ou capteurs d'oscillation.

9. Procédé selon une ou plusieurs des revendications précédentes, **caractérisé en ce qu'**on produit l'excitation par une force alors que le rotor tourne.

Fig. 1

$\Omega_B$= max. Betriebskreisfrequenz

Fig. 2